**Europäisches Patentamt**

**European Patent Office**

**Office européen des brevets**

(19)

(11) Veröffentlichungsnummer : **0 170 732 B2**

(12)

# NEUE EUROPÄISCHE PATENTSCHRIFT

(45) Veröffentlichungstag der neuen Patentschrift :
09.12.92 Patentblatt 92/50

(51) Int. Cl.⁵ : **B65G 65/46, A01F 25/20**

(21) Anmeldenummer : **84116193.8**

(22) Anmeldetag : **22.12.84**

(54) **Austrag- und Dosiervorrichtung, insbesondere für klumpenbildendes Futter, wie Grassilage oder dergleichen.**

(30) Priorität : **21.01.84 DE 3402085**

(43) Veröffentlichungstag der Anmeldung :
**12.02.86 Patentblatt 86/07**

(45) Bekanntmachung des Hinweises auf die
Patenterteilung :
**08.03.89 Patentblatt 89/10**

(45) Bekanntmachung des Hinweises auf die
Entscheidung über den Einspruch :
**09.12.92 Patentblatt 92/50**

(84) Benannte Vertragsstaaten :
**BE FR GB IT LU NL**

(56) Entgegenhaltungen :
**NL-C- 28 134
US-A- 2 633 272
US-A- 3 258 165
US-A- 3 303 917
US-A- 3 522 873
US-A- 4 344 580**

(73) Patentinhaber : **De Dissel Beheer B.V.
Dinxperlosestraatweg 88
NL-7122 AA Aalten (NL)**

(72) Erfinder : **Ansing, Jan Christiaan
Dinxperlosestraatweg 43
IJzerlo (Aalten) (NL)**

(74) Vertreter : **Schulze Horn, Stefan, Dipl.-Ing.
M.Sc.
Goldstrasse 36
W-4400 Münster (DE)**

**Beschreibung**

Die Erfindung betrifft eine Austrag- und Dosiervorrichtung, insbesondere für klumpenbildendes Futter, wie Grassilage o. dgl., bestehend aus einem auf der Oberseite offenen Behälter, der sich zum Boden hin verengt, einer im Bereich des Bodens und über die Bodenbreite verlaufenden, an einem einzigen Ende gelagerten Förderschnecke, einer Kratzwelle zur Durchmischung und Lockerung des Futters und einer verschließbaren Austragsöffnung an der der Antriebsseite der Förderschnecke entgegengesetzten Seite des Behälters, wobei die Förderschnecke in einem Förderkanal angeordnet ist, der auf seiner Oberseite offen ist, und wobei unmittelbar vor der Austragsöffnung im Inneren des Behälters ein Ende der Förderschnecke liegt.

In eines solchen bekannten Vortichtung läßt sich feinteiliges Futter, wie Corn-Cob-Mix gut verarbeiten. Die Verarbeitung von weniger feinem Material, wie Grassilage mit 3 bis 5 cm Schnittlänge, ist dagegen problematisch, da insbesondere halbtrockenes Gut zum Verklumpen neigt, sich unter der Förderschnecke festsetzt und die nur an einem Ende gelagerte Förderschnecke nach oben drockt.

Aus der US-A-3 258 165 ist bereits eine Vorrichtung bekannt, die stationär betrieben wird und bei welcher die Behälterseitenwände die Förderschnecke auf einem großen Teil ihres Umfanges umschließen. Die Führung der Schnecke wird dabei von einem zylindrischen Teil am Schneckenaustragende übernommen. Nachteilig ist bei dieser Vorrichtung, daß die Schnecke länger als die Kratzwelle sein muß und dadurch der Behälter nicht so breit sein kann, wie die Schneckenlänge beträgt bzw. daß die Gesamtbreite der Vorrichtung größer als die Behälterbreite sein muß. Der Aufbau ist auch sehr aufwendig.

Der Erfindung liegt die Aufgabe zugrunde, eine Austragund Dosiervorrichtung der genannten Art so weiterzubilden, daß eine optimale Raumausnutzung erfolgt, die Förderschnecke auch bei der Verarbeitung von weniger feinteiligem Futter wie Grassilage ihre Lage beibehält und das Futter sicher zur Austragsöffnung transportiert wird. Der Aufbau soll weiterhin auch sehr einfach sein. Diese Aufgabe wird erfindungsgemäß dadurch gelöst, daß bei der eingangs genannten Vorrichtung auf die Innenseite der Längsseitenwände des Behälters in Längstichtung des Förderkanals zu den Wänden hin abgewinkelte Bleche vorzugsweise symmetrisch zueinander aufgesetzt sind, wobei jedes Blech aus einem oberen und einem unteren Teil besteht, die miteinander eine Abkantung bilden, und daß die Abkantungen der Bleche die Förderschnecke nahezu berühren, so daß sie verhindern, daß beim Betrieb der Vorrichtung die Förderschnecke nach oben gedrückt wird. Es ist somit ein störungsfreier Austrag auch von stark zur Klumpenbildung neigendem Futtermaterial möglich.

Weitere vorteilhafte Ausgestaltungen der Vorrichtung sind in den abhängigen Ansprüchen angeführt.

Ein Ausführungsbeispiel der Erfindung ist in der Zeichnung dargestellt und wird im folgenden näher beschrieben. Es zeigen:

Figur 1 ein Vertikalschnitt der erfindungsgemäßen Vorrichtung,

Figur 2 die Förderschnecke und Kratzwelle der Vorrichtung.

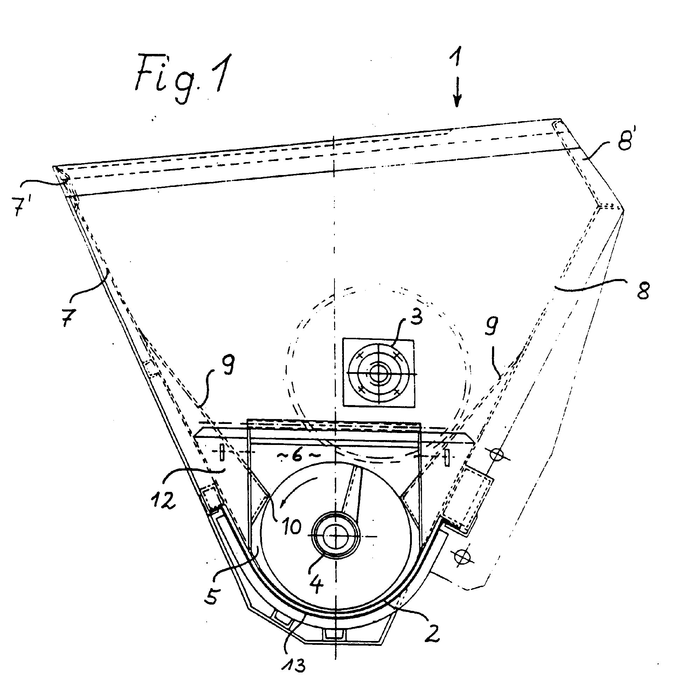

Gemäß Figur 1 besteht eine erfindungsgemäße Austrag- und Dosiervorrichtung, in der auch stark zur Klumpenbildung neigendes Futter, wie halbtrockene Grassilage, verarbeitet werden kann, aus einem auf seiner Oberseite offenen Behälter 1, der sich zu seinem gerundeten Boden 2 hin verengt, aus einer Kratzwelle 3 und einer Förderschnecke 4, die unterhalb der Kratzwelle 3 im Bereich des Bodens 2 in einem Förderkanal 5 angeordnet ist und die zerkleinertes und durchmischtes Futter zu einer Austragsöffnung 6 der Vorrichtung fördert.

Die Austragsöffnung 6 ist im unteren Bereich einer Seitenwand des Behälters 1 angeordnet. Unmittelbar vor der Öffnung 6 liegt im Inneren des Behälters 1 ein Ende der Förderschnecke 4, das andere Ende der Förderschnecke ist in der gegenüberliegenden Seitenwand gelagert. Auf dieser Seite erfolgt auch der Antrieb der Förderschnecke 4 und der Kratzwelle 3 in bekannter Weise durch einen Kettenantrieb (nicht gezeigt).

Auf der Innenseite der Längsseitenwände 7, 8 des Behälters sind im unteren Teil in Lähgsrichtung zu den Längsseitenwänden hin abgekantete Bleche 9 symmetrisch zur Achse der Förderschnecke 4 an ihren Kanten aufgeschweißt. Der Teil der Bleche 9 oberhalb der Abkantungen 10 bildet einen Trichter, der eine geringere Neigung als die Längsseitenwände 7 und 8 des Behälters aufweist. Der Auslauf des Trichters geht an den Abkantungen 10 in den Förderkanal 5 über, der von dem unteren Teil der Bleche 9 und dem gerundeten Behälterboden 2 gebildet wird. Der untere Teil der Bleche 9 verläuft dabei in Richtung von Tangenten an die Förderschnecke 4, deren Berührungspunkte etwa auf den Abkantungen 10 liegen. Die Abkantungen 10 verhindern, daß die Förderschnecke 4, die durch die Öffnung auf der Oberseite des Förderkanals 5 teilweise herausschaut, bei der Verarbeitung von stark klumpendem Futter nach oben gedrückt wird. Die mögliche Berührungsfläche zwischen Förderschnecke 4 und Blechen 9 ist sehr klein gehalten, um eine unnötige Materialbelastung durch Reibung zu vermeiden. Zur Verringerung der Reibung könnten in einer weiten Ausgeshalhung im Bereich der Abkantungen 10 die Bleche 9 auch etwas gegenüber der Förderschnecke 4 zurückspringen und auf den zurückspringenden Teilen eine Kunststoffauflage aufweisen.

Die Neigung des unteren Teils der Bleche 9 ist weiterhin so gewählt, daß der Förderkanal 5 möglichst eng gehalten ist und sich somit in dem Zwischenraum zwischen Förderschnecke und Kanalinnenseite nicht Futter festsetzen kann. Die Abkantungen 10 bilden ferner mit der Längsachse der Förderschnecke 4 einen Winkel von 120, so daß eine genügend große Öffnung des Förderkanals zur Aufnahme von Futter zur Verfügung steht.

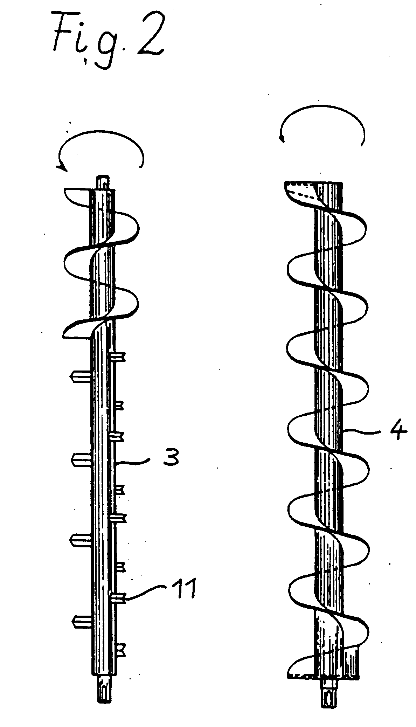

Die in Figur 2 dargestellte Kratzwelle 3 der Vorrichtung weist Kratzer 11 auf, durch die das bei abgesenktem Behälter über eine Ladekante 7′ der Längsseitenwand 7 aufgenommene Silagegut aufgelockert und zerkleinert wird. Eine zum Inneren des Behälters geneigte Kante 8′ der Längsseitenwand 8 verhindert dabei, daß höchsteigendes Futter aus dem Behälter herausfällt. Die Kratzwelle 3 arbeitet der Förderschnecke, wie durch die Pfeile in der Figur angedeutet ist, entgegen. Von der Förderschnecke 4 wird das durch die Öffnung des Förderkanals aufgenommene Futter zur Austragsöffnung 6 gefördert und gegen den Druck einer Klappe 12, die am oberen Rand der Austragsöffnung 6 angelenkt ist, auf eine Schütte 13 ausgetragen. Die Schütte 13 kann in bekannter Weise durch einen Stellhebel (nicht gezeigt) ein- und ausgefahren werden.

Weiterhin kann in die Austragsöffnung 6 der Vorrichtung zur Zerkleinerung von Futter auch ein Gitter mit einem Kranz von Gegenschneiden eingesetzt werden, die mit dem als Schneide ausgebildeten freien Ende der Förderschnecke 4 zusammenwirken.

**Patentansprüche**

1.  Austrag- und Dosiervorrichtung, insbesondere für klumpenbildendes Futter, wie Grassilage o. dgl., bestehend aus einem auf der Oberseite offenen Behälter, der sich zum Boden hin verengt, einer im Bereich des Bodens und über die Bodenbreite verlaufenden, an einem einzigen Ende gelagerten Förderschnecke (4), einer Kratzwelle (3) zur Durchmischung und Lockerung des Futters und einer verschließbaren Austragsöffnung an der der Antriebsseite der Förderschnecke (4) entgegengesetzten Seite des Behälters, wobei die Förderschnecke (4) in einem Förderkanal (5) angeordnet ist, der auf seiner Oberseite offen ist, und wobei unmittelbar vor der Austragsöffnung (6) im Inneren des Behälters (1) ein Ende der Förderschnecke (4) liegt,
    dadurch gekennzeichnet,
    daß auf die Innenseite der Längsseitenwände (7, 8) des Behälters in Längsrichtung des Förderkanals (5) zu den Wänden (7, 8) hin abgewinkelte Bleche (9) vorzugsweise Symmetrisch zueinander aufgesetzt sind, wobei jedes Blech (9) aus einem oberen und einem unteren Teil besteht, die miteinander eine Abkantung (10) bilden, und daß die Abkantungen (10) der Bleche (9) die Förderschnecke (4) nahezu berühren, so daß sie verhindern, daß beim Betrieb der Vorrichtung die Förderschnecke nach oben gedrückt wird.

2.  Vorrichtung nach Anspruch 1,
    dadurch gekennzeichnet,
    daß der abgewinkelte, untere Teil der Bleche (9) in Richtung einer Tangenten an die Förderschnecke (4) Verläuft.

3.  Vorrichtung nach einem der Ansprüche 1 oder 2,
    dadurch gekennzeichnet,
    daß die Bleche (9) im Bereich der Abkantungen (10) eine Kunststoffauflage aufweisen.

4.  Vorrichtung nach einem der Ansprüche 1 bis 3,
    dadurch gekennzeichnet,
    daß die Achse der Förderschnecke (4) mit den Abkantungen (10) der Bleche (9) einen Winkel von etwa 120° bildet.

**Claims**

1.  Delivery and dispensing means, more particularly for lumpforming feeds such as grass silage or the like, comprising:
    a hopper which is open at the top and narrows towards its base;
    a screw conveyor (4) which extends near the base and over the width thereof and is mounted at only one end;
    a scraper shaft (3) for mixing and loosening the feed;
    and a closable discharge opening on that side of the hopper which is remote from the drive end of the conveyor (4), the same being disposed in a conveyor trough (5) which is open at the top, and one end of the screw conveyor (4) lying immediately in front of the discharge opening in the hopper interior,
    **characterised in**
    that metal plates (9) are placed preferably symmetrically of one another and lengthwise of the conveying trough (5) on the inside of the longitudinal side walls (7, 8) of the hopper and are bent towards the latter walls, each plate (9) comprising a top part and a bottom part which co-operate with one another to form an edge (10), and the edges (10) substantially contact the screw conveyor (4) to prevent the same from being pressed upwards in operation.

2.  Means according to claim 1, characterised in that the bent bottom part of the plates (9) extends at a tangent to the conveyor (4).

**3.** Means according to claim 1 and/or 2, characterised in that the plates (9) have a plastics contact or bearing surface near the edges (10).

**4.** Means according to any of claims 1 - 3, characterised in that the conveyor axis forms an angle of approximately 120° with the plate edges (10).

## Revendications

**1.** Dispositif de déchargement et de dosage, notamment pour fourrage formant des mottes, tel qu'herbe ensilée ou analogue, constitué par un récipient ouvert en son côté supérieur et se rétrécissant vers le fond, par une vis transporteuse (4) passant dans la région du fond et s'étendant sur la largeur de celui-ci et montée sur palier en une seule extrémité, par un arbre porte-griffes (3) pour mélanger et disloquer le fourrage, et par une ouverture de décharge obturable située en celui des côtés du récipient qui est à l'opposé du côté entraînement de la vis transporteuse (4), la vis transporteuse (4) étant disposée dans un canal de transport (5) dont le côté supérieur est ouvert et une extrémité de la vis transporteuse (4) se trouvant à l'intérieur du récipient (1), immédiatement avant l'ouverture de décharge (6),
caractérisé
par le fait que des tôles (9) pliées vers les parois (7, 8) sont rapportées, de préférence en étant mutuellement symétriques, sur le côté intérieur des parois des côtés longitudinaux (7, 8) du récipient, chaque tôle (6) étant constituée par une partie supérieure et par une partie inférieure qui forment ensemble un pli à arête vive (10), et par le fait que les plis à arête vive (10) des tôles (9) touchent presque la vis transporteuse (4) de sorte qu'ils empêchent la vis transporteuse d'être poussée vers le haut lors du fonctionnement du dispositif.

**2.** Dispositif selon la revendication 1,
caractérisé
par le fait que la partie inférieure des tôles (9), résultant du pliage, s'étend dans la direction d'une tangente à la vis transporteuse (4).

**3.** Dispositif selon l'une des revendications 1 ou 2,
caractérisé
par le fait que les tôles (9) présentent un revêtement de matière plastique dans la région des plis à arête vive (10).

**4.** Dispositif selon l'une des revendications 1 à 3,
caractérisé
par le fait que l'axe de la vis transporteuse (4) forme un angle d'environ 120° avec les plis à arête vive (10) des tôles (9).

Fig. 1

Fig. 2

3

11

4